# EUROPÄISCHE PATENTSCHRIFT

(11) **EP 1 080 623 B1**
(45) Veröffentlichungstag und Bekanntmachung des Hinweises auf die Patenterteilung: **29.12.2004**
(21) Anmeldenummer: 00118138.7
(22) Anmeldetag: 29.08.2000
(51) Int. Cl.: A01C 1/08, B01J 19/08, H01J 33/00

(54) **Verfahren und Einrichtung zur Behandlung von Schüttgut, vorzugsweise von Saatgut, mit beschleunigten Elektronen**
Method and device for the treatment of bulk material, particularly seeds, with accelerated electrons
Procédé et dispositif pour le traitement des produits en vrac, notamment semences, avec des électrons accélérés

(30) Priorität: 03.09.1999 DE 19942142
(43) Veröffentlichungstag der Anmeldung: 07.03.2001
(73) Patentinhaber: Fraunhofer-Gesellschaft zur Förderung der angewandten Forschung e.V., 80686 München (DE)
(72) Erfinder: Panzer, Siegfried, Dr., 01279 Dresden (DE); Bartel, Rainer, 01324 Dresden (DE); Röder, Olaf, Dr., 01326 Dresden (DE)

(56) Entgegenhaltungen:
- DD-A- 242 337
- DE-A- 2 731 569
- US-A- 4 048 504
- US-A- 4 633 611

## Beschreibung

Die Erfindung bezieht sich auf ein Verfahren nach dem Oberbegriff des Anspruchs 1 und eine Einrichtung nach dem Oberbegriff des Anspruchs 7 zur Behandlung von Schüttgut, vorzugsweise von Saatgut, mit beschleunigten Elektronen. Das bevorzugte Anwendungsgebiet ist die phytosanitäre Behandlung von Saatgut gegen samenbürtige Schaderreger, die überwiegend in der Samenschale der Samenkörner angesiedelt sind. Weitere Anwendungsgebiete sind die Oberflächensterilisation infizierter Kunststoff-Einwegartikel nach der Zerkleinerung im Recyclingprozess, die chemische Oberflächenaktivierung sowie die Durchführung anderer strahlenchemischer Prozesse an Schüttgut.

Es sind verschiedene Verfahren und die entsprechenden Einrichtungen zur Behandlung von Schüttgut mit beschleunigten Elektronen in verschiedenen Ausführungen - angepasst an das zu behandelnde Gut - bekannt.
So wird in einer evakuierten Kammer durch gegenüberliegende Anordnung zweier Elektronenbeschleuniger ein Elektronenfeld mit entgegengesetzten Geschwindigkeitskomponenten der Elektronen erzeugt, durch welches das Schüttgut im freien Fall in einem ausgedehnten transparenten Strom geführt wird (DD 291 705). Zur Elektronenbehandlung wird das Schüttgut in die Kammer über Zellenradschleusen eingeschleust und nach dem Elektronenstrahlprozess wieder ausgeschleust. Der Nachteil solcher Einrichtungen ist jedoch der hohe apparative Aufwand für die Erzeugung des Elektronenfeldes, da mindestens zwei Elektronenbeschleuniger erforderlich sind, und der hohe vakuumtechnische Aufwand.

Es ist außerdem bekannt, ein Elektronenfeld mit entgegengesetzten Geschwindigkeitskomponenten dadurch zu erzeugen, dass der Elektronenstrahl, nachdem er den Strom der Schüttgutteilchen passiert hat, durch eine magnetische Umlenkung auf den Teilchenstrom zurückgelenkt wird. Einrichtungen dieser Art vermeiden den Aufwand für einen zweiten Elektronenbeschleuniger. Der Nachteil dieses Verfahrens besteht jedoch darin, dass durch den relativ langen Weg, den der Elektronenstrahl in der Prozesskammer durchläuft, ein wesentlich besseres Vakuum benötigt wird, was bezüglich der Vakuumerzeugung einen noch höheren apparativen Aufwand erfordert.

Es sind auch Verfahren und Einrichtungen bekannt, die mit zwei einander gegenüberliegenden Elektronenbeschleunigern arbeiten, wobei die Elektronen über ein Strahlaustrittsfenster an Atmosphärendruck austreten (DE 44 34 767 C1, EP 0 705 531 B1). Das Schüttgut wird dabei ebenfalls im freien Fall durch das Elektronenfeld geführt. Bei dieser Lösung entfällt der Aufwand zur sonst erforderlichen Evakuierung der Prozesskammer. Dennoch verbleibt der Nachteil des hohen apparativen Aufwandes durch den notwendigen Einsatz von mindestens zwei Elektronenbeschleunigern.

Es ist weiterhin bekannt, pulverförmige und körnige Materialien an Atmosphärendruck mit Elektronen zu behandeln, wobei nur ein Elektronenbeschleuniger zum Einsatz kommt und die zu bestrahlenden Teilchen in einem Gasstrom durch das Elektronenfeld getragen werden (WO 98/43274). Der Gasstrom mit den zu bestrahlenden Teilchen wird durch einen rechteckigen Kanal geführt, der an einer Seite mit einer 25 µm dicken Aluminumfolie verschlossen ist, durch welche die Elektronen nach ihrer Ausschleusung über eine 13 µm dicke Titanfensterfolie und Durchlaufen der Distanz bis zum Bestrahlungskanal eindringen. Der Aluminiumfolie gegenüberliegend wird der rechteckige Kanal durch eine ebene Platte aus einem Werkstoff hoher Ordnungszahl gebildet. Nach Durchdringen des Kanalquerschnitts werden die Elektronen von dieser Platte zu einem gewissen Anteil rückgestreut. Die rückgestreuten Elektronen haben eine der ursprünglichen Einfallsrichtung der Elektronen entgegengerichtete Geschwindigkeitskomponente und ermöglichen, dass auch die bezüglich der ursprünglichen Einfallsrichtung der Elektronen abgewandte Seite der Teilchen einem Elektronenbeschuss ausgesetzt ist.
Von Nachteil ist, dass die Intensität der Bestrahlung durch die rückgestreuten Elektronen wesentlich niedriger ist als die Intensität der Bestrahlung durch die unmittelbar aus dem Strahlaustrittsfenster austretenden Elektronen, was zu einer ungleichmäßigen Bestrahlung der einzelnen Teilchen führt. Nachteilig ist auch, dass die zum Tragen der Teilchen erforderliche Gasgeschwindigkeit mit steigendem Verhältnis von Masse zur Oberfläche der transportierten Teilchen stark ansteigt. Somit würden für größerkörnige Schüttgüter - wie z.B. Weizen oder Mais - sehr hohe Gasströmungsgeschwindigkeiten erforderlich werden. Bei diesen hohen Geschwindigkeiten würden die im Elektronenfeld übertragbaren Energiedosen auf sehr kleine, für zahlreiche Anwendungen wesentlich zu geringe Werte begrenzt werden. Ein weiterer Nachteil dieser bekannten Lösung besteht darin, dass die Elektronen nach dem Austritt aus dem Elektronenbeschleuniger noch zusätzlich die den rechteckigen Kanal verschließende Aluminiumfolie durchdringen müssen, bevor sie auf die zu behandelnden Teilchen treffen. Dadurch erleiden die Elektronen einen zusätzlichen unerwünschten Energieverlust.

Aus US 4,633,611 ist ein Verfahren bekannt, bei welchem zu behandelndes Saatgut mehrmals durch ein Elektronenfeld geführt wird. Zwischen den einzelnen Durchläufen erfolgt eine zufällige Lageänderung der Körner, was zu einer gleichmäßigen Beaufschlagung der gesamten Oberfläche der einzelnen Körner führt. Aufgrund der Vorschubmechanismen des Saatguts steht jedoch die genaue Anzahl der Durchläufe, die jedes einzelne Korn absolviert, nicht genau fest. So erhalten die einzelnen Körner zwar eine flächenmäßig gleiche aber bezüglich der Gesamtdosis eine extrem unterschiedliche Strahlenbelastung.

Der Erfindung liegt die Aufgabe zugrunde, ein Verfahren und eine zugehörige Einrichtung zur Behandlung von Schüttgut zu schaffen, die es gestatten, unabhängig von der Teilchengröße und mit vergleichsweise geringem vakuumtechnischen Aufwand, der auf die Vakuumerzeugung des Elektronenbeschleunigers beschränkt ist, eine hinreichend gleichmäßige Behandlung der Oberfläche von Schüttgutteilchen mit beschleunigten Elektronen bei etwa Atmosphärendruck durchzuführen.

Erfindungsgemäß wird die Aufgabe durch das Verfahren gemäß Patentanspruch 1 gelöst. Gegenstand des Anspruchs 7 ist eine zur Durchführung des Verfahrens geeignete Einrichtung. Besonders vorteilhafte Ausgestaltungen sind in den Ansprüchen 2 bis 6 und 8 bis 21 beschrieben.

Nach dem erfindungsgemäßen Verfahren wird der Schüttgutstrom bei Atmosphärendruck mehrmals durch ein Elektronenfeld geführt. Das hat den Vorteil, dass eine technologisch bedingte Transportgeschwindigkeit, die nach einem Durchlauf zu - für eine effektive Oberflächenbehandlung - zu niedrigen Energiedosen führt, beibehalten werden kann, da durch die wiederholte Einwirkung der Elektronen auf jedes Schüttgutteilchen die Oberfläche jedes Teilchens von genügend Elektronen beaufschlagt wird.

Inhomogenitäten der Intensität der Oberflächenbehandlung in einem einzelnen Durchlauf des Schüttgutstroms durch das Elektronenfeld werden ausgeglichen. Der Schüttgutstrom durchläuft mehrmals nacheinander das Elektronenfeld als ein zumindest im Bereich des Elektronenfeldes transparenter Schüttgutstrom. Beim Passieren des Elektronenfeldes wirken die Elektronen auf die Oberfläche der Teilchen ein und erzeugen nach dem ersten Durchlauf eine erste Dosisverteilung in der Teilchenoberfläche. Durch unterschiedliche Teilchenorientierung und -rotation im Elektronenfeld ist diese teilchenindividuell unterschiedlich. Die Dosisverteilung in der Oberfläche weist im Allgemeinen ein Dosismaximum und ein Dosisminimum auf. Beim Passieren des Elektronenfeldes in weiteren Durchläufen erfolgt wiederum eine Elektroneneinwirkung mit der gleichen Charakteristik. Die dadurch erzeugte Dosisverteilung wird jedoch durch die inzwischen erfolgte zufällige Bewegung der Teilchen der vorangegangenen statistisch überlagert. Damit wird die resultierende Gesamtdosisverteilung, welche sich aus der Summe der einzelnen Dosisverteilungen ergibt, mit jedem Durchlauf gleichmäßiger. Mehrfachanordnungen von Elektronenbeschleunigern zur Homogenisierung des Elektronenfeldes werden dadurch überflüssig. Es genügen einfache Elektronenreflektoren, um bereits nach wenigen

Durchläufen des Schüttgutstromes eine ausreichend gleichmäßige Dosisverteilung auf der Teilchenoberfläche zu erreichen. Die Anzahl der Durchläufe ist abhängig von der benötigten Dosishomogenität auf der Oberfläche der Teilchen.
Da somit auch die für eine magnetische Umlenkung des Elektronenstrahles erforderliche freie Weglänge der Elektronen entfällt, kann die Behandlung an Atmosphärendruck erfolgen. Damit ist nur für den Elektronenbeschleuniger selbst die Vakuumerzeugung nötig. Im geringen vakuumtechnischen Aufwand und der kostengünstigen Ausführbarkeit unter Einsatz nur eines Elektronenbeschleunigers liegen die entscheidenden Vorteile des Verfahrens. Damit ist auch die Möglichkeit gegeben, mit relativ geringem Aufwand die Einrichtung mobil auszuführen.

Im Folgenden wird das erfindungsgemäße Verfahren beschrieben.

In einem bekannten Elektronenbeschleuniger vom Typ mit Linearkatodensystem, vielfach auch Bandstrahler genannt, wird ein Elektronenstrahl erzeugt, der über ein Strahlaustrittsfenster an Atmosphäre austritt. Die Beschleunigungsspannung zur Erzeugung des Elektronenstrahls wird entsprechend der gewünschten Eindringtiefe der Elektronen in die Oberfläche der Teilchen des Schüttgutes angepasst und die Strahlleistung auf die zu übertragende Energiedosis festgelegt.
Das Elektronenfeld, welches sich vor dem Strahlaustrittsfenster ausbildet, hat den Querschnitt eines langgestreckten Rechtecks mit in Längsrichtung des Rechteckes gleichen Eigenschaften. Vor dem Strahlaustrittsfenster wird quer zu seiner Längsrichtung in mehreren Bereichen das Schüttgut vorbeigeführt. Die Anzahl der Bereiche richtet sich nach der geforderten Dosishomogenität auf der Teilchenoberfläche, was die Zahl der erforderlichen Durchläufe der Teilchen des Schüttgutes durch das Elektronenfeld bestimmt. Jeder Durchlauf erfolgt in einem gesonderten Bereich. Die Bereiche sorgen dafür, dass der Schüttgutstrom bei einem Durchlauf jeweils durch einen bestimmten Teil des Elektronenfeldes geführt wird.

Die Einrichtung zur Durchführung des Verfahrens ist wie folgt aufgebaut: Eine Prozesskammer ist in eine der Anzahl der Durchläufe des Schüttgutes entsprechende Anzahl von Teilkammern unterteilt. Ein Elektronenbeschleuniger mit Strahlaustrittsfenster ist quer zum Schüttgutstrom angeordnet und erstreckt sich über die gesamte Breite der Prozesskammer. Die Teilkammern sind kanalartig ausgebildet und bilden dadurch Bereiche, in denen das Schüttgut behandelt wird.

Die Ausgänge der ersten bis vorletzten Teilkammer sind mit Mitteln zur Förderung des Schüttgutes verbunden, die das Schüttgut vom Ausgang einer Teilkammer zum Eingang der jeweils nächsten Teilkammer transportieren. Der Eingang der ersten Teilkammer und der Ausgang der letzten Teilkammer sind mit Einrichtungen zur Zu- und Abführung des Schüttgutes zur und von der Einrichtung versehen, was einen kontinuierlichen Betrieb der Anlage ermöglicht. Bevor das Schüttgut der ersten Teilkammer zugeführt wird, wird das Schüttgut durch entsprechende mechanische Einrichtungen vereinzelt, so dass es den Bereich des Elektronenfeldes als transparenter Schüttgutstrom im freien Fall passiert. Vor dem Eintritt in den nächsten Bereich erfolgt erneut eine mechanische Vereinzelung zu einem transparenten Schüttgutstrom. Entsprechend der Anzahl der Bereiche werden diese Durchläufe mehrmals wiederholt. Nach Durchlaufen des letzten Bereiches erfolgt der Abtransport des Schüttgutes.

Die Elektronen des Elektronenfeldes haben eine bevorzugte Geschwindigkeitskomponente in Strahleinfallsrichtung. Vorteilhafterweise sind gegenüber dem Strahlaustrittsfenster Elektronenreflektoren angeordnet. Die an diesen Elektronenreflektoren rückgestreuten Elektronen haben jedoch eine geringere Intensität als die im Elektronenstrahl einfallenden Elektronen. Dadurch kommt es zu einer inhomogenen Dosisverteilung auf der Teilchenoberfläche. Die Vereinzelung in einen transparenten Schüttgutstrom gewährleistet, dass sich die einzelnen Teilchen des Schüttgutes nicht gegenseitig abschatten und damit die Wirksamkeit der Elektronenbehandlung vermindert wird. Gleichzeitig sorgen die Bewegungsabläufe bei Förderung und Vereinzelung dafür, dass die Teilchen des Schüttgutes bei jedem Durchlauf eine andere Orientierung bezüglich des Elektronenfeldes haben. Die einzelnen Dosisverteilungen auf der Oberfläche der Schüttgutpartikel werden statistisch überlagert.
Das Minimum der pro Flächenelement übertragenen Dosis liegt etwa beim halben Maximalwert, welcher auf der dem Strahlaustrittsfenster zugewandten Teilchenseite auftrifft. Diese Dosisverteilung auf der Teilchenoberfläche bedingt, dass bereits nach drei Durchläufen des Schüttgutes eine für die meisten Anwendungen ausreichende Homogenität der Oberflächenbehandlung erzielt wird.

Die Variante, bei der ein transparenter Schüttgutstrom das Elektronenfeld im freien Fall durchläuft, ist technologisch besonders leicht zu realisieren. Daneben ist es jedoch denkbar, zur Erhöhung des Durchsatzes das Schüttgut durch eine Vorrichtung am Eingang der Bereiche auf eine bestimmte Geschwindigkeit zwangsweise zu beschleunigen und die Teilchen nach dieser Vorbeschleunigung im freien Fall durch das Elektronenfeld zu führen. Eine gezielte Abbremsung der Teilchen ist vorteilhaft für besonders stoßempfindliche Schüttgüter.

An einem Ausführungsbeispiel wird die Erfindung näher beschrieben.
Die zugehörigen Zeichnunaen zeigen in
- Fig. 1:: eine Ansicht einer Einrichtung zur Elektronenbehandlung von Saatgut mit einem Elektronenbeschleuniger mit Strahlaustrittsfenster und einem Fördersystem für einen dreimaligen Durchlauf des Saatgutes durch das Elektronenfeld,
- Fig. 2:: einen Querschnitt durch einen Teil der Einrichtung gemäß Fig. 1 im Bereich des Elektronenfeldes.

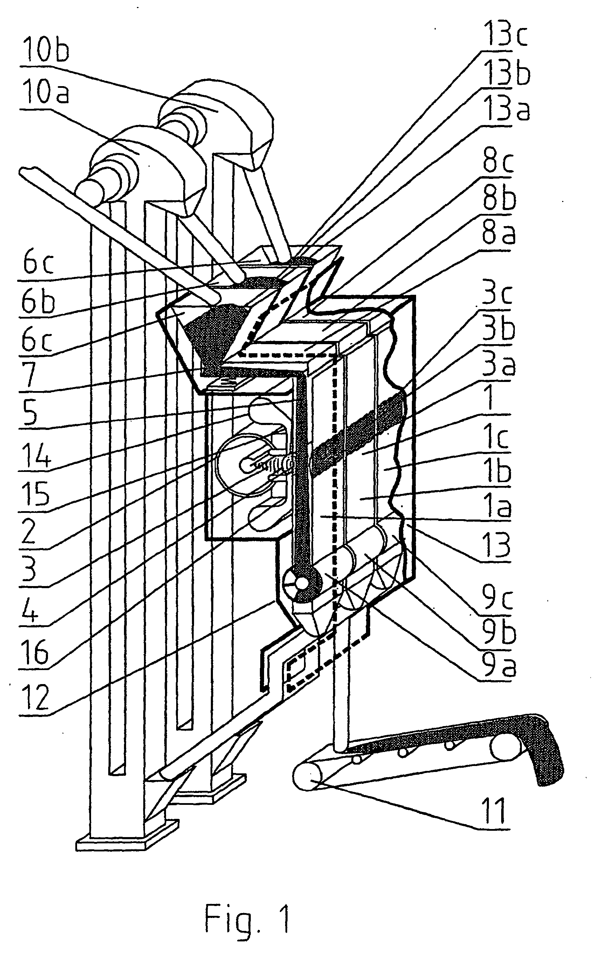

In Fig. 1 ist der prinzipielle Aufbau einer dreigeteilten Prozesskammer 1 mit den Teilkammem 1a; 1b; 1c dargestellt. Auf einer Seite der Teilkammern 1a; 1b; 1c ist ein Elektronenbeschleuniger 2 als Bandstrahler quer zur Durchlaufrichtung des zu behandelnden Saatgutes angeordnet. Der Elektronenbeschleuniger 2 erzeugt einen Elektronenstrahl 3. Durch ein Strahlaustrittsfenster 4 tritt der Elektronenstrahl 3 in die mit Stickstoff oder Luft gefüllten Teilkammern 1a; 1b; 1c. Im Bereich vor dem Strahlaustrittsfenster 4 besteht somit in jeder Teilkammer 1a; 1b; 1c ein Elektronenfeld 3a; 3b; 3c, welches auf das im freien Fall geförderte Saatgut 5 einwirkt. Das Saatgut 5 wird dem Einlauftrichter 6a zugeführt. Mit Hilfe einer Dosiereinrichtung 7 erfolgt die Einstellung des erforderlichen Massendurchsatzes an Saatgut. Ein Vibrationsförderer 8a vereinzelt das Saatgut 5 zu einem transparenten Vorhang, der im freien Fall durch das Elektronenfeld 3a geführt wird. Eine Zellradschleuse 9a als Abdichtung dient zur Ausschleusung des Saatgutes 5 aus der Teilkammer 1a. Eine Fördereinrichtung 10a führt das Saatgut 5 dem Einlauftrichter 6b zu. Das Saatgut durchläuft den Vibrationsförderer 8b, die Teilkammer 1b und wird ein zweites Mal der Elektroneneinwirkung, im Elektronenfeld 3b, unterzogen. Der Saatgutaustrag aus der Teilkammer 1b erfolgt durch die Zellradschleuse 9b. Mit Hilfe der Fördereinrichtung 10b wird das Saatgut 5 erneut nach oben transportiert und dem Vibrationsförderer 8c zugeführt. In der Teilkammer 1c gelangt das Saatgut 5 im freien Fall durch das Elektronenfeld 3c und wird ein drittes Mal der Elektroneneinwirkung ausgesetzt. Durch die Übertragung der Energiedosis in 3 Schritten mit jeweils erneuter Lageänderung der einzelnen Körner des Saatgutes 5 wird eine ausreichend homogene Verteilung der Energiedosis auf nahezu jedem Korn erreicht.

Nach Ausschleusung des Saatgutes 5 durch die Zellradschleuse 9c übernimmt die Fördereinrichtung 11 den Abtransport des Saatgutes 5 in bekannter Weise. Der Elektronenbeschleuniger 2 mit Strahlaustrittsfenster 4 und die Teilkammern 1a, 1b und 1c sind in einer Strahlenschutzverkleidung 12 eingehaust. Die S-förmige Ausbildung der Strahlenschutzverkleidung im Bereich der Vibrationsförderer 8a; 8b; 8c und an den Zellradschleusen 9a; 9b; 9c gewährleistet die Strahlendichtheit.
Der Austausch des Gases in den Teilkammern 1a; 1b; 1c, die mit Luft oder Stickstoff gefüllt sind, mit der Umgebungsluft wird auf der Saatgutaustrittsseite durch die Zellradschleusen 9a; 9b; 9c verhindert. Zur Abdichtung der Saatgutzuführung im oberen Bereich der Einlauftrichter 6a; 6b; 6c dient die Saatgutsäule 13a; 13b; 13c, deren Füllstand durch Regeleinrichtungen (nicht dargestellt) konstant gehalten wird. Die Abdichtung beim Anfahren und Leerfahren der Anlage erfolgt durch gesteuerte Luftklappen (nicht dargestellt). Das zur Kühlung des Strahlaustrittsfensters 4 dienende Kühlgas ist identisch mit dem Gas in den Teilkammern 1a; 1b; 1c und wird durch ein Düsensystem 14 mit Gaseinlass 15 und Gasauslass 16 an dem Strahlaustrittsfenster 4 vorbeigeführt.

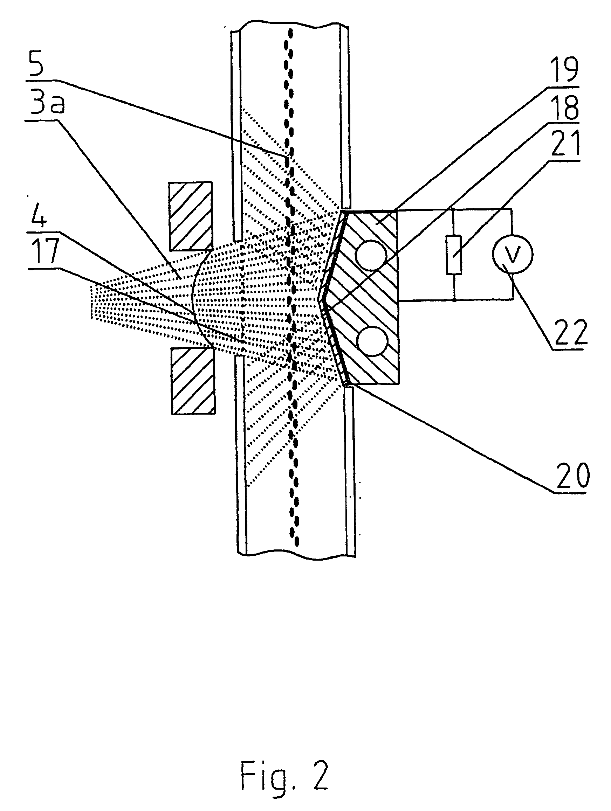

Fig. 2 zeigt einen Ausschnitt als Querschnitt im Bereich des Elektronenfeldes durch eine Einrichtung zur Elektronenbehandlung von Saatgut mit einem profilierten, dachartig ausgebildeten Elektronenreflektor, der gleichzeitig zur Gewinnung eines dosisproportionalen Signals dient.
Die Elektronen des Elektronenfeldes 3a treten durch das Strahlaustrittsfenster 4 an Atmosphärendruck aus, durchqueren zum größten Teil ein Gitter 17, das zum Schutz des Strahlaustrittsfensters 4 vor abprallenden Saatkörnern dient, und treffen teilweise auf den vereinzelten Strom des Saatgutes 5. Der übrige Teil der Elektronen trifft ohne Wechselwirkung mit dem Saatgut 5 auf den profilierten Elektronenreflektor 18 und wird so reflektiert, dass die zuvor aus einer Vorzugsrichtung auftreffenden Elektronen des Elektronenfeldes 3a in zwei unterschiedliche Richtungen rückgestreut werden. Das Saatgut 5 wird durch die aus verschiedenen Raumrichtungen auftreffenden Elektronen beaufschlagt, was zusätzlich zum Mehrfachdurchlauf des Saatgutes 5 eine homogenere Verteilung der Energiedosis am Umfang eines jeden Saatkornes bewirkt.

Der Elektronenreflektor 18 ist auf einem gekühlten Halter 19 montiert und durch einen Isolator 20 von diesem elektrisch getrennt. Der Anteil des auf den Elektronenreflektor 18 treffenden Elektronenstromes, der nicht zurückgestreut wird, fließt über einen Widerstand 21 gegen Erde ab. Ein Spannungsmessgerät 22 ermöglicht die Messung des Spannungsabfalles über dem Widerstand 21 und so die Gewinnung eines dosisabhängigen Signals. Dieses Signal wird in bekannter Weise einem Prozessrechner zugeführt und zum Zwecke der Prozesssteuerung weiterverarbeitet.

## Patentansprüche

1. Verfahren zur Behandlung von Schüttgut, vorzugsweise Saatgut (5), mit beschleunigten Elektronen, bei dem das Schüttgut in einem transparenten Schüttgutstrom bei näherungsweise Atmosphärendruck durch das von einem Elektronenbeschleuniger (2) mit Strahlaustrittsfenster (4) erzeugte Elektronenfeld (3a, 3b; 3c) geführt wird, **dadurch gekennzeichnet, dass** die zur Behandlung erforderliche Energiedosis in einer genau vorgegebenen Anzahl von Durchläufen auf die Schüttgutteilchen übertragen wird, indem das Schüttgut mehrmals nacheinander im freien Fall durch das Elektronenfeld (3a, 3b; 3c) geführt wird.

2. Verfahren nach Anspruch 1, **dadurch gekennzeichnet, dass** die Intensitätsverteilung der Elektronen des Elektronenfeldes (3a; 3b; 3c) bei jedem Durchlauf gleich eingestellt wird.

3. Verfahren nach mindestens einem der Ansprüche 1 und 2, **dadurch gekennzeichnet, dass** das Schüttgut das Elektronenfeld (3a; 3b; 3c) bei jedem Durchlauf mit der gleichen Geschwindigkeit durchläuft.

4. Verfahren nach mindestens einem der Ansprüche 1 bis 3, **dadurch gekennzeichnet, dass** bei der Behandlung des Schüttgutes mit beschleunigten Elektronen ein Prozessgas zugeführt wird.

5. Verfahren nach Anspruch 4, **dadurch gekennzeichnet, dass** das Prozessgas Stickstoff ist.

6. Verfahren nach mindestens einem der Ansprüche 1 bis 5, **dadurch gekennzeichnet, dass** das Schüttgut das Elektronenfeld (3a; 3b; 3c) als einlagiger transparenter Schüttgutstrom durchläuft.

7. Einrichtung zur Behandlung von Schüttgut, vorzugsweise Saatgut (5), mit beschleunigten Elektronen nach Anspruch 1, bestehend aus mindestens einem Elektronenbeschleuniger (2) mit Strahlaustrittsfenster (4), den zugehörigen vakuumtechnischen, elektrischen und streuerungstechnischen Mitteln zum Betrieb des Elektronenbeschleunigers (2), Mitteln für eine Zu- und Abführung (11) des Schüttgutes und Mitteln (8a; 8b; 8c) für die Erzeugung eines transparenten Schüttgutstromes durch eine Prozesskammer (1), **dadurch gekennzeichnet,**
- **dass** die Prozesskammer (1) aus mehreren Bereichen (1a; 1b; 1c) besteht,
- **dass** sich der Elektronenbeschleuniger (2) über alle diese Bereiche erstreckt,
- **dass** der Elektronenbeschleuniger (2) quer zum Schüttgutstrom angeordnet ist,
- **dass** über jedem Bereich eine Schüttgutaufnahme (6a;6b;6c) für das in diesem Bereich zu behandelnden Schüttgut und eine Vorrichtung (8a; 8b; 8c) zur Erzeugung des transparenten Schüttgutstromes angeordnet ist,
- **dass** unterhalb jedes Bereiches eine Auffangvorrichtung für das in diesem Bereich behandelte Schüttgut angeordnet ist,
- **dass** die Schüttgutaufnahme (6a) über dem ersten Bereich der Prozesskammer (1a) mit einer Vorrichtung für die Zufuhr des unbehandelten Schüttgutes verbunden ist,
- **dass** die Auffangvorrichtung unter dem letzten Bereich des Schüttgutdurchlaufes mit einer Vorrichtung (11) zur Abführung des behandelten Schüttgutes verbunden ist,
- **dass** alle anderen Auffangvorrichtungen unter den Bereichen durch Mittel (10a; 10b) zur Förderung des Schüttgutes mit der Schüttgutaufnahme (6b; 6c) über den im Schüttgutdurchlauf nächsten Bereich (1b; 1c) verbunden sind.

8. Einrichtung nach Anspruch 7, **dadurch gekennzeichnet, dass** der Elektronenbeschleuniger (2) vom Typ mit Linearkathodensystem ist.

9. Einrichtung nach Anspruch 7 oder 8, **dadurch gekennzeichnet, dass** Kanäle zur Führung des Schüttgutstroms durch das Elektronenfeld (3a; 3b; 3c) des Elektronenbeschleunigers (2) angeordnet sind.

10. Einrichtung nach Anspruch 9, **dadurch gekennzeichnet, dass** die Kanäle rechteckigen Querschnitt haben und nebeneinander aneinandergrenzend angeordnet sind.

11. Einrichtung nach Anspruch 9 oder 10, **dadurch gekennzeichnet, dass** die Tiefe der Kanäle in Strahlrichtung der Elektronen kleiner als die Reichweite der Elektronen an Atmosphärendruck ist.

12. Einrichtung nach einem der Ansprüche 9 bis 11, **dadurch gekennzeichnet, dass** die Wandung der Kanäle im Bereich erhöhter Auftreffdichte der Elektronen als Elektronenreflektor ausgebildet ist, der aus einem Werkstoff hoher Ordnungszahl besteht.

13. Einrichtung nach einem der Ansprüche 9 bis 12, **dadurch gekennzeichnet, dass** in dem Kanal im Bereich der erhöhten Auftreffdichte der Elektronen ein Elektronenreflektor (18) angeordnet ist, der aus einem Werkstoff hoher Ordnungszahl besteht.

14. Einrichtung nach Anspruch 12 oder 13, **dadurch gekennzeichnet, dass** der Elektronenreflektor (18) überwiegend aus Wolfram besteht.

15. Einrichtung nach einem der Ansprüche 12 bis 14, **dadurch gekennzeichnet, dass** der Elektronenreflektor (18) aus mehreren Segmenten besteht.

16. Einrichtung nach einem der Ansprüche 12 bis 14, **dadurch gekennzeichnet, dass** der Elektronenreflektor (18) profiliert ausgebildet ist.

17. Einrichtung nach einem der Ansprüche 12 bis 16, **dadurch gekennzeichnet, dass** der Elektronenreflektor (18) gegen Erdpotential isoliert angeordnet ist, um ein von der Elektronenstromdichte und Teilchenstromdichte abhängiges Signal abzunehmen.

18. Einrichtung nach mindestens einem der Ansprüche 8 bis 17, **dadurch gekennzeichnet, dass** unter den Bereichen der Prozesskammer (1a; 1b; 1c) Vorrichtungen (9a; 9b; 9c) zur Abdichtung der Prozesskammer (1) und zur Ausschleusung des Schüttgutes angeordnet sind.

19. Einrichtung nach mindestens einem der Ansprüche 8 bis 18, **dadurch gekennzeichnet, dass** mit den Schüttgutaufnahmen (6a; 6b; 6c) Mittel zur Messung und Regelung des Schüttgutfüllstandes verbunden sind.

20. Einrichtung nach mindestens einem der Ansprüche 8 bis 19, **dadurch gekennzeichnet, dass** vor dem Strahlaustrittsfenster (4) ein für Elektronen transparentes Gitter (17) mit Gitteröffnungen kleiner als die Teilchen des Schüttgutes angeordnet ist.

21. Einrichtung nach mindestens einem der Ansprüche 8 bis 20, **dadurch gekennzeichnet, dass** in der Nähe des Strahlaustrittsfensters (4) Düsen zum Einlass eines Gasstromes angeordnet sind.

## Claims

1. A method for the treatment of bulk material, particularly seeds (5), with accelerated electrons, wherein the bulk material in a transparent bulk material flow is directed at approximate atmospheric pressure through a field of electrons (3a; 3b; 3c) created by an electron accelerator (2) with a jet exit window (4), **characterized in that** the required quantity of energy for the treatment is passed to the bulk material particles in an exact given number of run-throughs by directing the bulk material several subsequent times through the field of electrons (3a, 3b; 3c) in free-fall.

2. Method according to claim 1, **characterized in that** the intensity distribution of the electrons in the field of electrons (3a, 3b; 3c) can be adjusted equally at each run-through.

3. Method according to at least one of the claims 1 and 2, **characterized in that** the bulk material is passing the field of electrons (3a, 3b; 3c) with the same speed at each run-through.

4. Method according to at least one of the claims 1 to 3, **characterized in that** a process gas is added during the treatment of the bulk material with accelerated electrons.

5. Method according to claim 4, **characterized in that** the process gas is nitrogen.

6. Method according to at least one of the claims 1 to 5, **characterized in that** the bulk material is passing the field of electrons (3a, 3b; 3c) as a one-layered transparent bulk material flow.

7. Device for the treatment of bulk material, particularly seeds (5), with accelerated electrons according to claim 1, comprising at least one electron accelerator (2) comprising a jet exit window (4), the affiliated means to supply vacuum, electricity and control for the operation of the electron accelerator (2), means for an entry and exit (11) of the bulk material and means (8a; 8b; 8c) for the creation of a transparent bulk material flow through a process chamber (1), **characterized in that**
- the process chamber (1) comprises several areas (1a; 1b; 1c),
- the electron accelerator (2) extends over all of these areas,
- the electron accelerator (2) is positioned laterally to the bulk material flow,
- a bulk material receiver (6a; 6b; 6c) for the bulk material to be treated in the respective area and a device (8a, 8b, 8c) for the creation of the transparent bulk material flow is positioned above each area,
- a collection device for the bulk material treated in the respective area is positioned below each area,
- the bulk material receiver (6a) above the first area of the process chamber (1a) is connected with a device for the feed of the untreated bulk material,
- the collection device below the last area of the bulk material run-through is connected with a device (11) for the take-away of the treated bulk material,
- all other collection devices below the areas are connected with the bulk material receivers (6b; 6c) above the respective downstream area (1b; 1c) of the bulk material run-through by means of conveyors (10a; 10b).

8. Device according to claim 7, **characterized in that** the electron accelerator (2) is a linear cathode system.

9. Device according to claim 7 or 8, **characterized in that** channels are implemented for directing the bulk material flow through the field of electrons (3a, 3b; 3c) of the electron accelerator (2).

10. Device according to claim 9, **characterized in that** the channels have a rectangular cross section and are positioned adjacent next to each other.

11. Device according to claim 9 or 10, **characterized in that** the depth of the channels in the direction of the jet of electrons is smaller than the range of electrons at atmospheric pressure.

12. Device according to one of the claims 9 to 11, **characterized in that** the walls of the channels in the areas of increased impact density of electrons are implemented as an electron reflector, which consists of a material with a high ordinal number.

13. Device according to claims 9 to 12, **characterized in that** an electron reflector (18) is positioned in the area of the channel with an increased impact density of electrons, which consists of a material with a high ordinal number.

14. Device according to claim 12 or 13, **characterized in that** the electron reflector (18) consists predominantly of wolfram.

15. Device according to one of the claims 12 to 14, **characterized in that** the electron reflector (18) comprises several segments.

16. Device according to one of the claims 12 to 14, **characterized in that** the electron reflector (18) has a profile.

17. Device according to one of the claims 12 to 16, **characterized in that** the electron reflector (18) is positioned isolated against ground potential to receive a signal that is dependent on the density of the electron flow and the particle flow.

18. Device according to at least one of the claims 8 to 17, **characterized in that** devices (9a; 9b; 9c) for the sealing of the process chamber (1) and the take-away of the bulk material are positioned below the areas of the process chamber (1a; 1b; 1c).

19. Device according to at least one of the claims 8 to 18, **characterized in that** means for the measurement and control of the bulk material level are connected with the bulk material receivers (6a; 6b; 6c).

20. Device according to at least one of the claims 8 to 19, **characterized in that** a grid (17), which is transparent for electrons, with grid openings smaller than the particles of the bulk material is positioned upstream of the jet exit window (4).

21. Device according to at least one of the claims 8 to 20, **characterized in that** nozzles for the entry of a gas flow are positioned close to the jet exit window (4).

## Revendications

1. Procédé de traitement de produits en vrac, de préférence de semences (5), avec des électrons accélérés, selon lequel le produit en vrac est transporté dans un courant de produit en vrac transparent, sous pression approximativement atmosphérique, à travers le champ d'électrons (3a, 3b ; 3c) généré par un accélérateur d'électrons (2) avec fenêtre de sortie de faisceau (4),
**caractérisé en ce que**
la dose d'énergie nécessaire pour le traitement est transmise aux particules du produit en vrac dans un nombre de passages déterminé précisément, en faisant passer le produit en vrac plusieurs fois successivement en chute libre à travers le champ d'électrons (3a, 3b ; 3c).

2. Procédé selon la revendication 1,
**caractérisé en ce que**
la répartition d'intensité des électrons du champ d'électrons (3a ; 3b ; 3c) est réglée de façon identique pour chaque passage.

3. Procédé selon au moins l'une quelconque des revendications 1 et 2,
**caractérisé en ce que**
le produit en vrac traverse le champ d'électrons (3a ; 3b ; 3c) à chaque passage à la même vitesse.

4. Procédé selon au moins l'une quelconque des revendications 1 à 3,
**caractérisé en ce que**
lors du traitement du produit en vrac avec des électrons accélérés un gaz de process est apporté.

5. Procédé selon la revendication 4,
**caractérisé en ce que**
le gaz de process est de l'azote.

6. Procédé selon au moins l'une quelconque des revendications 1 à 5,
**caractérisé en ce que**
le produit en vrac traverse le champ d'électrons (3a ; 3b ; 3c) sous la forme d'un courant de produit en vrac transparent à une couche.

7. Dispositif de traitement de produits en vrac, de préférence de semences (5), avec des électrons accélérés selon la revendication 1, comprenant au moins un accélérateur d'électrons (2) avec fenêtre de sortie de faisceau (4), les moyens de vide, électriques et de commande associés pour le fonctionnement de l'accélérateur d'électrons (2), des moyens d'alimentation et d'évacuation (11) du produit en vrac et des moyens (8a ; 8b ; 8c) pour générer un courant de produit en vrac transparent à travers une chambre de process (1),
**caractérisé en ce que**
- la chambre de process (1) comprend plusieurs zones (1a : 1b ; 1c),
- l'accélérateur d'électrons (2) s'étend sur toutes ces zones,
- l'accélérateur d'électrons (2) est disposé transversalement au courant de produit en vrac,
- au-dessus de chaque zone on a un récipient de produit en vrac (6a ; 6b ; 6c) pour le produit en vrac à traiter dans cette zone et un dispositif (8a ; 8b ; 8c) pour générer le courant de produit en vrac transparent,
- en dessous de chaque zone on a un dispositif de récupération pour le produit en vrac traité dans cette zone,
- le récipient de produit en vrac (6a) au-dessus de la première zone de la chambre de process (1a) est relié à un dispositif pour l'alimentation en produit en vrac non traité,
- le dispositif de récupération en dessous de la dernière zone de passage de produit en vrac est relié à un dispositif (11) pour l'évacuation du produit en vrac traité,
- tous les autres dispositifs de récupération en dessous des zones sont reliés au récipient de produit en vrac (6b ; 6c) au-dessus de la zone (1b ; 1c) la plus proche dans le passage de produit en vrac par des moyens (10a ; 10b) pour transporter le produit en vrac.

8. Dispositif selon la revendication 7,
**caractérisé en ce que**
l'accélérateur d'électrons (2) est du type avec système à cathodes linéaires.

9. Dispositif selon la revendication 7 ou 8,
**caractérisé en ce que**
des canaux sont disposés pour le guidage du courant de produit en vrac à travers le champ d'électrons (3a ; 3b ; 3c) de l'accélérateur d'électrons (2).

10. Dispositif selon la revendication 9,
**caractérisé en ce que**
les canaux présentent une section transversale rectangulaire et sont juxtaposés de façon adjacente.

11. Dispositif selon la revendication 9 ou 10,
**caractérisé en ce que**
la profondeur des canaux en direction du faisceau des électrons est inférieure à la portée des électrons sous pression atmosphérique.

12. Dispositif selon l'une quelconque des revendications 9 à 11,
**caractérisé en ce que**
la paroi des canaux, dans la zone d'une densité d'impact plus importante des électrons, présente la forme d'un réflecteur d'électrons réalisé à partir d'un matériau d'un nombre atomique élevé.

13. Dispositif selon l'une quelconque des revendications 9 à 12,
**caractérisé en ce que**
dans le canal dans la zone de la densité d'impact plus importante des électrons un réflecteur d'électrons (18) est réalisé à partir d'un matériau d'un nombre atomique élevé.

14. Dispositif selon la revendication 12 ou 13,
**caractérisé en ce que**
le réflecteur d'électrons (18) est réalisé en majeure partie en tungstène.

15. Dispositif selon l'une quelconque des revendications 12 à 14,
**caractérisé en ce que**
le réflecteur d'électrons (18) comprend plusieurs segments.

16. Dispositif selon l'une quelconque des revendications 12 à 14,
**caractérisé en ce que**
le réflecteur d'électrons (18) présente une forme profilée.

17. Dispositif selon l'une quelconque des revendications 12 à 16,
**caractérisé en ce que**
le réflecteur d'électrons (18) est disposé de façon isolée par rapport au potentiel de terre pour prélever un signal dépendant de la densité du courant d'électrons et de la densité du courant de particules.

18. Dispositif selon au moins l'une quelconque des revendications 8 à 17,
**caractérisé en ce qu'**
en dessous des zones de la chambre de process (1a ; 1b ; 1c) des dispositifs (9a ; 9b ; 9c) rendent étanche la chambre de process (1) et éclusent le produit en vrac.

19. Dispositif selon au moins l'une quelconque des revendications 8 à 18,
**caractérisé en ce que**
les récipients de produit en vrac (6a ; 6b ; 6c) sont reliés à des moyens pour mesurer et réguler le niveau de remplissage du produit en vrac.

20. Dispositif selon au moins l'une quelconque des revendications 8 à 19,
**caractérisé en ce que**
devant la fenêtre de sortie de faisceau (4) est disposée une grille (17) transparente pour des électrons, avec des orifices de grille plus petits que les particules du produit en vrac.

21. Dispositif selon au moins l'une quelconque des revendications 8 à 20,
**caractérisé en ce qu'**
à proximité de la fenêtre de sortie de faisceau (4) des buses sont disposées pour l'admission d'un courant de gaz.
